**Europäisches Patentamt**

**European Patent Office**

**Office européen des brevets**

(11) Veröffentlichungsnummer: **0 154 660**
**A1**

## (12) EUROPÄISCHE PATENTANMELDUNG

(21) Anmeldenummer: 84102827.7

(22) Anmeldetag: 15.03.84

(51) Int. Cl.⁴: **F 16 K 35/06**

(43) Veröffentlichungstag der Anmeldung: 18.09.85
Patentblatt 85/38

(84) Benannte Vertragsstaaten: **AT BE CH DE FR GB IT LI LU NL SE**

(71) Anmelder: **Bernhard Sänger Armaturengetriebe. Fernantriebstelle., Burgweg 19, D-4600 Dortmund 1 (DE)**

(72) Erfinder: **Oehler, Rolf, Dipl.-Ing., Auf dem Hilf 54, D-5840 Schwerte 4 (DE)**

(74) Vertreter: **Herrmann-Trentepohl, Werner, Dipl.-Ing. et al, Schaeferstrasse 18, D-4690 Herne 1 (DE)**

(54) Rohrleitungsarmaturenantrieb mit abschliessbarer Betätigungssperre.

(57) Bei einem Rohrleitungsarmaturenantrieb mit abschließbarer Betätigungssperre, die einen über wenigstens ein Schloß zugänglichen Kupplungsbolzen aufweist, welcher den Kraftschluß von einer vorzugsweise mit einer Handhabe betätigten Antriebswelle auf die Armaturenspindel herstellt oder aufhebt und in einem das Schloß aufnehmenden Gehäuse gelagert ist, welches eine mehrteilige Befestigungsvorrichtung zur Verbindung mit der Armatur aufweist ist erfindungsgemäß vorgesehen, daß das Schloß (13) zum Verschließen und Freigeben einer Gehäuseaussparung (22) dient, durch die der Kupplungsbolzen (18) zugänglich und verstellbar ist und durch die ein in einer vorgegebenen Reihenfolge mit wenigstens einem im Gehäuse (5) untergebrachten weiteren Befestigungsteil (3; 58, 62, 65, 85; 96, 33, 104, 109) verknüpftes Befestigungsteil (33, 93) erreichbar ist, welches als erstes in der Reihenfolge der Demontage der Befestigungsvorrichtung lösbar ist.

0154660

Bernhard Sänger,  Armaturengetriebe. Fernantriebsteile.
Burgweg 19, D-4600 Dortmund 1

"Rohrleitungsarmaturenantrieb mit abschließbarer
Betätigungssperre"

Die Erfindung betrifft einen Rohrleitungsarmaturenantrieb mit abschließbarer Betätigungssperre gemäß
dem Oberbegriff des Anspruches 1.

Mit Antrieben versehene Rohrleitungsarmaturen, d.h.
Schieber, Hähne, Ventile o.dgl. weisen im allgemeinen
Handhaben oder Knebel zur Drehung einer Spindel auf,
welche das Betätigungsorgan der Armatur verstellt,
d.h. öffnet oder schließt und auch Zwischenstellungen
ermöglicht. Wenn solche Armaturen allein gelassen
werden müssen, was z.B. bei Fernleitungssystemen,
wie Gas- und Erdölpipelines der Fall ist, muß
die Möglichkeit einer Sicherung gegen unbefugtes
Betätigen durch ein Schloß bestehen. Die erfindungsgemäßen Rohrleitungsarmaturenantriebe werden

- 2 -

anstelle des üblichen Antriebes auf die Armatur aufgesetzt und weisen ein oder mehrere Schlösser auf, welche in das Gehäuse integriert sind. Mehrere Schlösser sollen bei wichtigen Armaturen gewährleisten, daß nur zwei mit je einem Schlüssel ausgerüstete Bedienungspersonen gemeinsam die Armatur bedienen können. Da der Kupplungsbolzen in dem Gehäuse des Antriebes gelagert ist, bleibt er von außen unzugänglich. Daher kann nur der Schlüsselinhaber die Sperre aufheben, welche erst den Kraftschluß von der Handhabe in die Armaturenspindel ermöglicht, wobei die Sperre je nach Aufbau des Armaturenantriebes im einzelnen bei verriegeltem Schloß die Drehung der Handhabe zuläßt, ohne daß die Armaturenspindel mitgenommen wird, oder die Handhabe gegen Drehung sperrt und dadurch die Betätigung der Armaturenspindel ausschließt.

Das Gehäuse eines solchen Rohrleitungsarmaturenantriebes kann zur Unterbringung einer Reihe weiterer Baugruppen dienen, welche z.B. die Schalter einer elektrischen Fernübermittlung der Stellung des Absperrorganes oder Zeiger bzw. Zeigergetriebe darstellen, mit denen die Stellung der Armatur von außen sichtbar und kontrollierbar gemacht wird. Da außerdem das Gehäuse mit der Armatur versperrt werden muß, hauptsächlich um die Reaktionskräfte mit dem Gehäuse abtragen zu können, ergibt sich aus der stets begrenzten Bauhöhe und Baubreite auf der Armatur die Schwierigkeit, in einem klein bauenden Gehäuse eine mehr oder weniger große Anzahl unterschiedlicher Baugruppen unterzubringen, die teils unumgänglich, teils vorteilhaft sind und daher wahlweise eingebaut werden.

Die Erfindung geht von einem vorbekannten Rohrleitungsarmaturenantrieb aus. Hierbei ist das Gehäuse auf den bei den meisten Armaturen funktionsbedingten, äußeren Armaturenflansch aufgeschraubt, durch den die Spindel nach außen tritt. Diese Befestigungsvorrichtung des Gehäuses besteht aus mehreren Schrauben, die auf einem Lochkreis angeordnet sind. Die als Hohlwelle ausgebildete Antriebsspindel sitzt entweder auf der Spindel des Absperrorganes oder bei steigender Spindel auf der diese umgebenden Buchse. Zum Verschluß des vorbekannten Armaturenantriebes dienen ein oder zwei Zylinderschlösser, welche mit ihrem Gehäuse fest in das Gehäuse des Antriebes eingebaut sind und mit ihrem im Gehäuse beweglichen Schließzylinder den Kupplungsbolzen bilden oder diesen betätigen. Der Kupplungsbolzen läßt sich aus einer Zahnlücke einer Zahnscheibe herausziehen oder in eine solche Lücke einbringen, um den Kraftschluß zu unterbrechen oder freizugeben. Die Zahnscheibe ermöglicht auf diese Weise die Wahl einer bestimmten Stellung bzw. Zwischenstellung des Absperrorganes, mit der der Rohrleitungsarmaturenantrieb abgeschlossen wird, was allerdings voraussetzt, daß vorher diese Stellung aufgesucht wird.

Es hat sich herausgestellt, daß solche Rohrleitungsarmaturenantriebe nicht bedenkenlos alleingelassen

0154660

werden können, weil die Befestigungsschrauben sich nicht dagegen sichern lassen, daß sie von unbefugten Personen gelockert oder gelöst werden, die sich geeignete Schraubenschlüssel besorgen. Der Erfindung liegt daher die Aufgabe zugrunde, diese Möglichkeit auszuschließen, ohne daß dadurch der Rohrleitungsarmaturenantrieb seine Fähigkeit verliert, weitere, in das Gehäuse eingebaute Baugruppen für die Fernanzeige oder die Festlegung einer bestimmten Armaturenstellung oder die Anzeige der Stellung des Absperrorganes aufnehmen zu können.

Diese Aufgabe löst die Erfindung mit den Merkmalen des Anspruches 1. Zweckmäßige Ausführungsformen der Erfindung sind Gegenstand der Unteransprüche.

Gemäß der Erfindung wird das Schloß, das mit einem weiteren Schloß ergänzt werden kann, wenn die Armatur wie bekannt nur von zwei Personen entriegelt werden soll, nicht nur für den Kupplungsbolzen, sondern als Verschluß einer Gehäuseaussparung verwendet, wobei die Öffnung bzw. die Aussparung selbst weitgehend verkleinert werden können, wenn das Schloßgehäuse den entfernbaren Deckel der Aussparungsöffnung bildet. Durch diese Aussparung ist einerseits der Kupplungsbolzen zugänglich, der deswegen nach dem Freilegen der Aussparung verstellt werden kann; andererseits wird dann gleichzeitig ein Befestigungsteil erreichbar, welches deswegen durch den Innenraum der Aussparung montiert und demontiert werden kann. Dieses Befestigungsteil ist mit einem oder mehreren weiteren Befestigungsteilen in einer vorgegebenen Reihenfolge
verknüpft, die bei der Montage oder Demontage der
Befestigungsvorrichtung des Gehäuses eingehalten
werden muß. Dadurch ist es möglich, einerseits die
Aussparung so klein zu halten, daß sie im Gehäuse
untergebracht werden kann und andererseits alle
Teile der Befestigungsvorrichtung im Gehäuse einzuschließen, so daß sie von außen oder bei geöffnetem Schloß erreichbar sind. Auf diese Weise
läßt sich ein äußerlich glattes Gehäuse verwirklichen, dessen Befestigungsvorrichtung nur für
Schlüsselbesitzer zugänglich ist und das deswegen
von Unbefugten nicht demontiert werden kann.

Bei einer einfachen Ausführungsform der Erfindung,
welche sich deswegen insbesondere für kleinere
Ventile und insbesondere Absperrhähne eignet, deren
Stellung man nicht unbedingt festlegen muß, bevor
man das Gehäuse verschließt, läßt sich auf eine
feste Verbindung des Gehäuses mit der Rohrleitungsarmatur bzw. dem Rohrleitungsarmaturengehäuse verzichten. Das ist Gegenstand einer zweckmäßigen
Ausführungsform der Erfindung mit den Merkmalen
des Anspruches 2. Bei dieser Ausführungsform der
Erfindung wird das Antriebsgehäuse lediglich auf
der Spindel bzw. bei steigender Spindel auf der
Buchse der Armatur befestigt, ist aber gegenüber dem Armaturengehäuse drehbar.

Gleichwohl läßt sich bei einer solchen Ausführungsform der Erfindung eine Voreinstellung der Armatur
festlegen, die zwangsläufig eingehalten werden muß, wenn das Schloß betätigt werden soll. Das ist Gegenstand der Ausführungsform nach Anspruch 6. Die Anordnung ist hierbei so gewählt, daß auch die zur Voreinstellung dienenden Baugruppen, obwohl sie außerhalb des Antriebsgehäuses untergebracht sind, für Unbefugte unzugänglich sind, wenn das Schloß betätigt worden ist.

Allerdings ist diese Ausführungsform auf Spindeldrehungen beschränkt, welche kleiner als ein Vollkreis sind und eignet sich daher insbesondere für Absperrhähne. Für größere, d.h. vielfache Spindelumdrehungen eignet sich dagegen die Ausführungsform nach Anspruch 4. Hierbei ist das Gehäuse mit dem Armaturengehäuse vorzugsweise mit dem Merkmal des Anspruches 3 auf mehrere, auf einem Lochkreis angeordnete Schrauben verspannt, wobei der Flansch und das Gehäuse durch den als Drehverbindung ausgebildeten Verschluß miteinander verbunden sind. Dabei sind beliebige Drehstellungen des Gehäuses gegenüber dem Flansch möglich.

Bei einer weiteren Ausführungsform der Erfindung legt man dagegen Flansch und Gehäuse auf eine bestimmte Stellung zueinander fest, was mit den Merkmalen des Anspruches 5 geschehen kann. Diese Teile dienen lediglich als Befestigungsvorrichtung. Wenn bei einer derartigen Ausführungsform ebenfalls eine Voreinstellung der Armatur gewünscht wird, kann dies mit den Merkmalen des Anspruches 7 ausgeführt werden. Dabei ergibt sich der Vorteil, daß der Spannring gleichzeitig zur Betätigung eines an sich bekannten Zeigergetriebes Verwendung finden kann, welches über mehrere Spindelumdrehungen die Stellung des Absperrorganes nach außen sichtbar macht.

Die Einzelheiten, weiteren Merkmale und andere Vorteile der Erfindung ergeben sich aus der nachfolgenden Beschreibung von Ausführungsbeispielen, die vorstehend allgemein erörtert worden sind, anhand der Figuren in der Zeichnung; es zeigen

Fig. 1 im Längsschnitt eine erste Ausführungsform eines erfindungsgemäßen Rohrleitungsarmaturenantriebes, wobei die Spindel des Betätigungsorganes der Armatur abgebrochen dargestellt ist,

Fig. 2 eine Draufsicht auf den Gegenstand der Fig. 1,

Fig. 3 eine abgeänderte Ausführungsform in der Fig. 1 entsprechender Darstellung,

Fig. 4 eine Draufsicht auf den Zwischenflansch, der bei der Ausführungsform nach Fig. 3 verwendet wird,

Fig. 5 in den Fig. 1 bis 3 entsprechender Darstellung eine abgeänderte Ausführungsform,

Fig. 6 das in den dargestellten Ausführungsformen verwendete SChloß in zwei Betätigungsstellungen,

Fig. 7  eine weitere Ausführungsform der Erfindung im Längsschnitt,

Fig. 8  eine Draufsicht auf den Gegenstand der Fig. 7 und

Fig. 9  eine andere Ausführungsform der Erfindung im Längsschnitt.

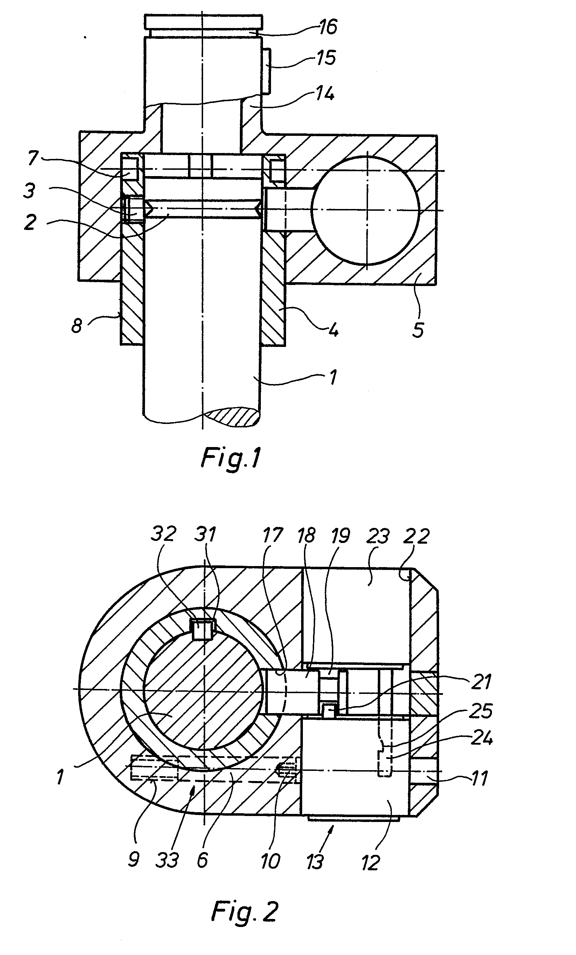

Gemäß der Darstellung in den Fig. 1 und 2 ist die Spindel 1 einer Rohrleitungsarmatur, z.B. eines Absperrhahnes an ihrem oberen, aus dem Armaturengehäuse herausgeführten Ende mit einer Umfangsnut 2 versehen. Eine Madenschraube 3 greift in die Nut 2 ein und sitzt in einer Hülse 4, welche auf das Ende der Spindel 1 gestülpt ist. Die Hülse 4 ist in einem Gehäuse 5 drehbar und axial mit dem Schaft einer Schraube 6 versperrt, der in eine Umfangsnut 7 eingreift, welche auf der Außenseite 8 der Büchse 4 angebracht ist. Der Bolzen 6 ist mit Außengewinde versehen und in einer mit Innengewinde versehenen Sackbohrung 9 des Gehäuses 5 drehbar. Er weist einen Innensechskant 10 auf, welcher durch eine Bohrung 11 mit einem Schlüssel erreichbar ist, sofern vorher  das Zylinderschloß  13 herausgenommen wurde. Im eingebauten Zustand des Zylinderschlosses 13 versperrt dessen Zylinder 12 die Flucht der Bohrung 11 mit der Sackbohrung 9.

Das Gehäuse 5 bildet eine Baueinheit mit einer Hohlwelle 14,  in die außen ein Keil 15 eingesetzt werden kann und die eine Ringnut 16 aufweist. Die Ringnut 16 dient zur axialen Versperrung der Nabe eines
Handrades, das nicht dargestellt ist, während der
Keil 15 den Formschluß der Welle 14 mit der Handradnabe herbeiführt.

Das Gehäuse weist eine weitere Querbohrung 17 auf, welche einen Kupplungsbolzen 18 führt. Der Kupplungsbolzen
hat eine Ringnut 19, in die ein Exzenterstift 21 des
Schlosses 13 eingreift, der zur Verschiebung des
Kupplungsbolzens in beiden Richtungen dient. Das
Schloß sitzt in einer querverlaufenden zylindrischen Aussparung 22, in die von einer Seite ein Zylinder 23 oder
ein weiteres Schloß eingeschoben ist, welcher zwei Gabelstifte 24 an seinem inneren Ende trägt. Einer der Gabelstifte
ist mit einer keilförmigen Aussparung 25 versehen.

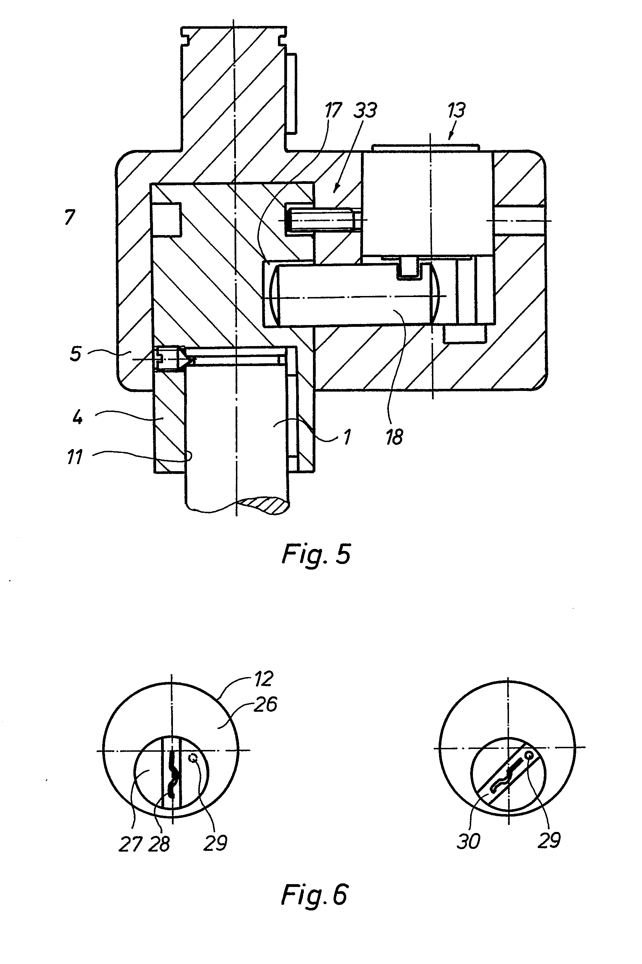

Das Zylinderschloß 13 ist von an sich bekannter
Konstruktion und daher nicht in seinen Einzelheiten
wiedergegeben. Das Schloßgehäuse 12 paßt in die
Gehäuseaussparung 22. Wie die Darstellung der Fig. 6
erkennen läßt, ist in der äußeren Stirnseite 26 des
Gehäuses 12 eine drehbare Schlüsselplatte 27 versenkt angeordnet und gelagert. Die Schlüsselplatte 27
läßt sich mit dem Schlüssel verdrehen, wenn dieser
in das Schlüsselloch 28 eingeführt ist. Unter der
Schlüsselplatte 27 befindet sich eine Bohrung 29,
durch die ein in die Aussparung 25 einrastender
Stift mit einem in die Bohrung 29 eingeführten Draht
aus der Aussparung 25 herausgedrückt werden kann.
Dazu muß die Schlüsselplatte 27 mit dem Schlüssel
in die Position verdreht werden, die rechts in Fig. 6 wiedergegeben ist und,in der die Bohrung 29 unter dem Schlitz 30 liegt, der zum Einführen des Schlüssels in das Loch 28 in der Schließplatte 27 vorgesehen ist.

Die Ausführungsform nach den Fig. 1 und 2 arbeitet wie folgt: In der dargestellten Funktion der Teile ist der Kupplungsbolzen 18 in die Radialbohrung 17 der Büchse 4 eingerastet und stellt dadurch einen Formschluß mit dem Gehäuse 5 her. Der mit dem Schlüssel verdrehbare Exzenterbolzen 21 des Zylinderschlosses 13 ist in die Umfangsnut 19 des Kupplungsbolzens 18 eingerastet. Wenn die Antriebswelle 14 mit Hilfe des Handrades verdreht wird, nimmt das Gehäuse 5 über den Kupplungsbolzen 18 die Hülse 4 mit. Diese Hülse nimmt über den in ihre innere Axialnut 31 eingreifenden Keil 32 der Spindel 1 die Spindel mit. In der dargestellten Stellung der Teile kann also das Absperrorgan betätigt werden.

Wird der Schließzylinder des Zylinderschlosses 13 mit dem Schlüssel gedreht, so verstellt der Exzenterbolzen 21 den Kupplungsbolzen 18 derart, daß der Formschluß des Gehäuses 5 mit der Büchse 4 aufgehoben wird. In dieser Stellung des Schließzylinders läßt sich der Schlüssel abziehen. Wird nunmehr die Antriebswelle 14 mit dem Handrad betätigt, so dreht sich das Gehäuse 5 um die Achse der Spindel 1, die stehen bleibt. Eine Betätigung der Spindel 1 ist dann ausgeschlossen.

In der dargestellten Position der Teile läßt sich das Zylinderschloss 13 in der im Zusammenhang mit der Fig. 6 beschriebenen Weise herausnehmen. Dann kann der Rohrleitungsarmaturenantrieb von der Spindel in folgender Weise demontiert werden: Die Befestigungsvorrichtung besitzt im Falle des Ausführungsbeispiels nach den Fig. 1 und 2 zwei Befestigungsteile und zwar den beschriebenen Stift mit dem Innensechskant 10 und dem Zapfen 6, der allgemein mit 33 bezeichnet ist und die Madenschraube 3, welche in die Ringnut 2 der Spindel 1 eingreift. Diese Teile sind nur in einer vorgegebenen Reihenfolge demontierbar. Zunächst muß der Stift 33 durch die Bohrung 11 und die Aussparung 22 entfernt werden. Dann läßt sich das Gehäuse von der Büchse 4 abziehen. Erst dadurch wird die Madenschraube 3 zugänglich, die dann herausgedreht werden kann, um die Büchse 4 von der Spindel 1 abzuziehen. Daraus ergibt sich, daß bei abgeschlossenem Zylinderschloß 13 alle Teile des Rohrleitungsarmaturenantriebes nicht von der Spindel 1 demontiert werden können, weil sie von außen nicht zugänglich sind.

Die Ausführungsform nach Fig. 5 unterscheidet sich nur unwesentlich von der Ausführungsform nach den Fig. 1 und 2. Während nämlich in der Ausführungsform nach den Fig. 1 und 2 der Zylinder 23 als zweites Schloß ausgebildet sein kann, ist die Ausführungsform nach Fig.5 auf den Einbau eines Zylinderschlosses 13 beschränkt.

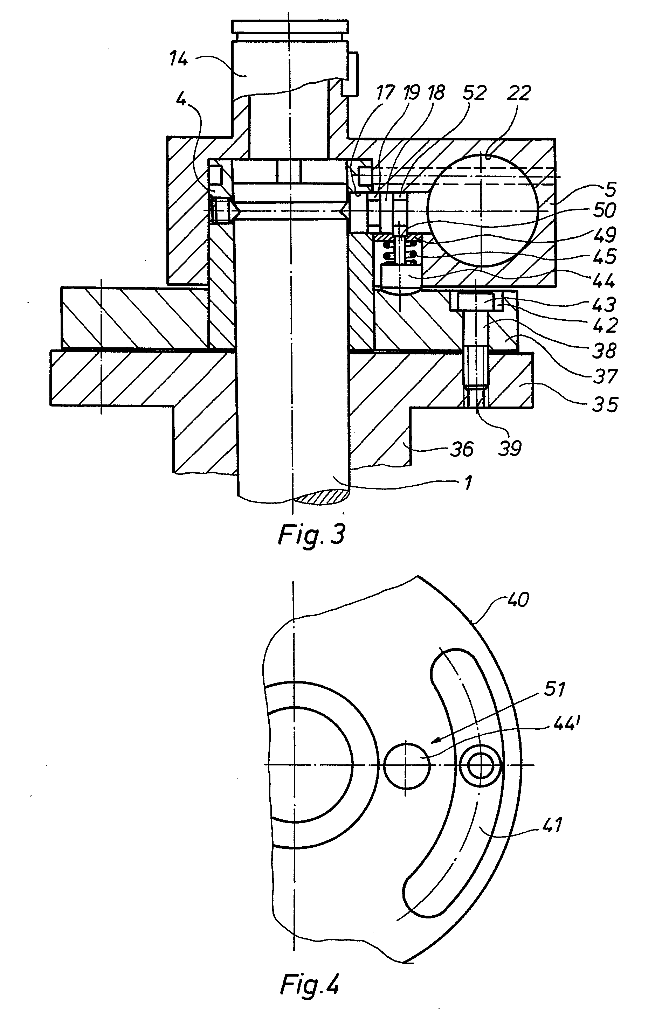

Die Ausführungsform nach den Fig.3 und 4 entspricht der Ausführungsform nach den Fig. 1 und 2, bietet aber die Möglichkeit einer Voreinstellung der Armatur, bevor das Zylinderschloß abgeschlossen wird. Man kann dadurch eine Öffnungs- oder Schließstellung der Armatur vorgeben, die zwangsweise eingehalten wird, wenn das Zylinderschloß abgeschlossen ist.

Zu diesem Zweck ist zwischen dem Gehäuse 5 und einem Flansch 35 des Armaturengehäuses 36 eine Zwischenplatte 37 angeordnet. Die Zwischenplatte ist mit Hilfe mehrerer Stiftschrauben 38, welche sich jeweils in eine Gewindebohrung 39 des Armaturenflansches 35 eindrehen lassen, auf der Oberseite des Armaturenflansches verspannt. Die Zwischenplatte 37 hat für jede dieser Schrauben einen kreisförmigen Außenrand 40 und eine dem Außenrand entsprechend gekrümmte Langlochaussparung 41, welche gemäß dem dargestellten Ausführungsbeispiel etwa über einen Viertelkreis reicht. Die Langlochaussparung durchsetzt die Zwischenplatte 37 und hat einen oberen Abschnitt 42, der zum Versenken des Stiftschraubenkopfes 43 dient, welcher ebenfalls einen Innensechskant aufweist. Neben der Langlochaussparung 41 befindet sich eine blinde Sackbohrung 44, in die der abgerundete Kopf eines federnden Stiftes 44 einrasten kann, der sich mit seiner Unterseite auf einer Spiralfeder 45 abstützt, die ihrerseits von einer Federplatte 49 gehalten wird. Die Federplatte 49 hat eine Aussparung für den Schaft 50 des Stiftes, der zusammen mit der Sackbohrung 44 eine allgemein mit 51 bezeichnete Rastvorrichtung bildet.

Die Rastvorrichtung 51 wirkt mit dem Kupplungsbolzen 28 und zwar mit einer auf diesem angeordneten weiteren Ringnut 52 zusammen, die neben der Ringnut 23 für den Exzenterstift 21 des Zylinderschlosses 13 vorgesehen ist.

Die Ausführungsform nach den Fig. 3 und 4 arbeitet wie folgt: Wie aus Fig. 3 ersichtlich, kann der Stift 50 der Rastvorrichtung 51 die Nut 52 des Kupplungsbolzens 18 nur verlassen, wenn das Gehäuse 5 derart über der Sackbohrung 54 steht, daß der Kopf 44 in diese eingreifen kann. In dieser Stellung kann der Kupplungsstift 18 in die Querbohrung 17 der Hülse 4 eingeschoben werden. Zu diesem Zweck muß vorher das Zylinderschloß 13 in der beschriebenen Weise aus der Aussparung 22 herausgenommen werden. Die Darstellung der Teile in Fig. 3 gibt demnach den Zustand wieder, der bei herausgenommenem Zylinderschloß 13 hergestellt wird, um die Armatur einzustellen.

Dazu wird über die Welle 16 die Spindel 1 der Armatur in die gewollte Zwischenstellung verbracht. Sobald diese erreicht ist, wird die Zwischenplatte 37 so lange gedreht, bis die Sackbohrung 44' unter dem Kopf 44 des Stiftes 50 angekommen ist. Dann wird die Schraube 38 festgezogen. Der Kupplungsstift 18 wird durch das Einrasten des Kopfes 4 in die Sackbohrung 44' frei und kann nach innen geschoben werden. Das geschieht in dem Maße, daß der Exzenterbolzen 21 des Zylinderschlosses 13, das nunmehr eingesetzt wird, in die Nut 23 eingreifen kann. Wenn das Schloß 13 abgeschlossen ist, führt eine Drehung der Welle 14 dazu, daß das Gehäuse 5 sich frei um die Spindel 1 drehen kann, weil der Kopf 44 infolge seiner Abrundung aus der ebenfalls abgerundeten Sackbohrung 44' heraustreten kann, wobei der Stift 50 am Kupplungsbolzen 18 vorbei in die Querbohrung des Gehäuses eintreten kann.

Nur bei herausgenommenem Zylinderschloß 13 lassen sich die Teile 33 und 3, welche zusammen die Befestigungsvorrichtung bilden, in der vorgegebenen Reihenfolge lösen.

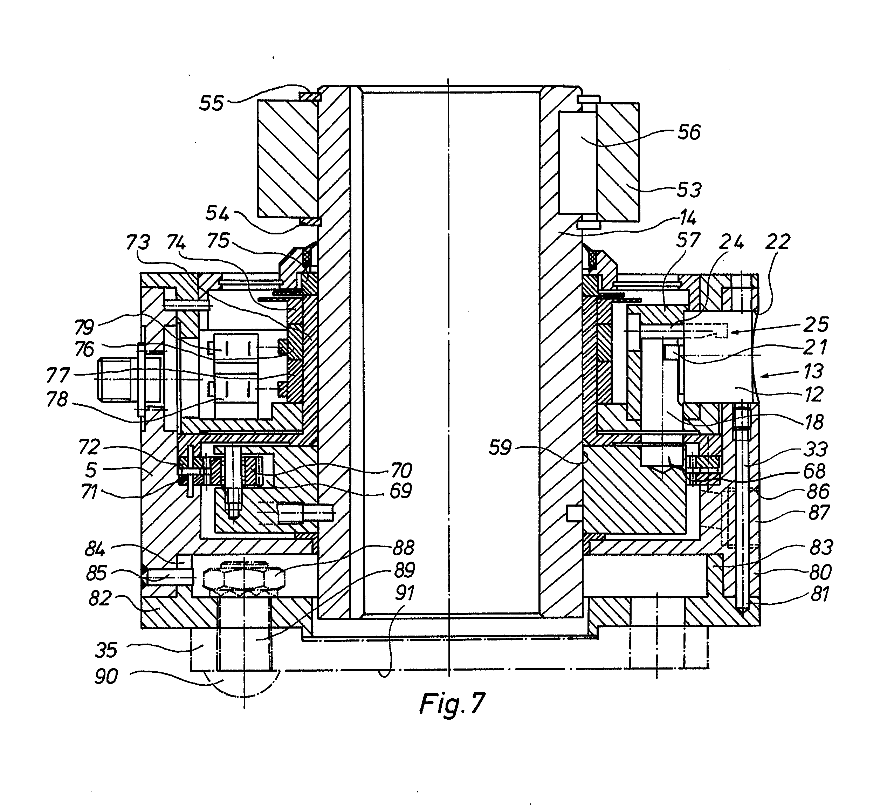

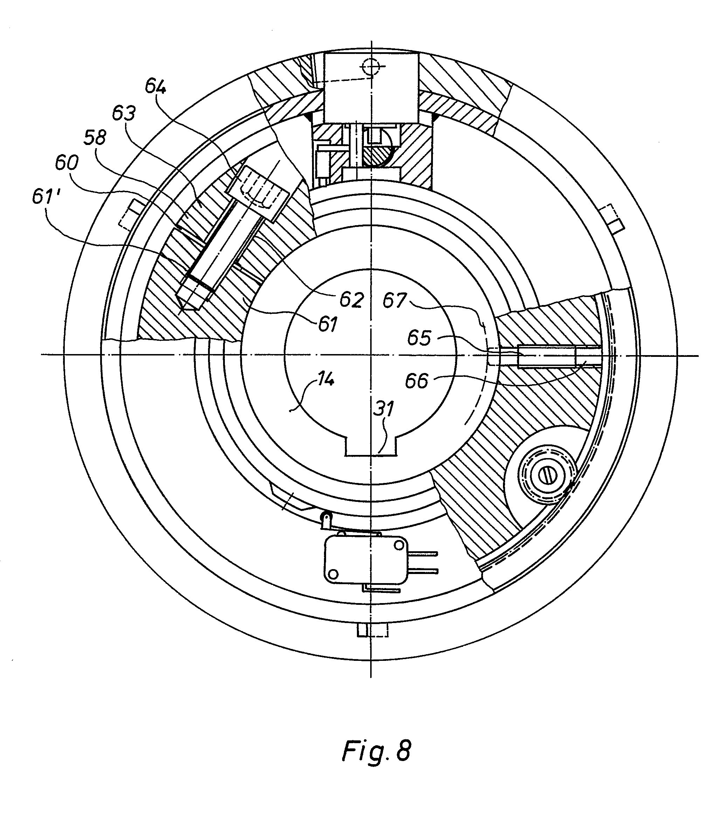

Die Ausführungsform nach den Fig. 7 und 8 ist für größere Armaturen vorgesehen, welche einen über viele Spindelumdrehungen eingestellten Spindelweg zulassen. Die Antriebswelle 14 ist als Hohlwelle ausgebildet, die bei steigender Spindel auf die Buchse des Armaturenantriebes aufgesetzt wird, sonst aber die Spindel umschließt, welche mit einem in die Axialnut 31 eingesetzten Keil formschlüssig gemacht wird. Der Antrieb der Welle 14 erfolgt über ein Handrad, dessen Nabe bei 53 in Fig. 7 gezeichnet und mit Sprengringen 54, 55 axial festgelegt, sowie mit einem Keil 56 formschlüssig gemacht wird. Das zylindrische Gehäuse 5 weist eine radiale Aussparung 22 auf, welche mit einem Blindboden 57 verschlossen ist. Dieser dient zur Befestigung der Stifte 24 mit der Aussparung 25 zur Halterung des Schlosses 13 in der Aussparung 22. Der Exzenterbolzen 21 hält den Kupplungsstift 18 in der dargestellten Position, in der der Formschluß zwischen dem Gehäuse 5 über
den Kupplungsbolzen 18 mit einem Spannring 58
unterbrochen ist, der kraftschlüssig gegen Verdrehung auf dem Mantel 59 der Hohlwelle $1^4$ festgelegt ist. Zu diesem Zweck ist der Spannring 58
mit einem Spalt 60 unterbrochen. Der Spalt 60 trennt
den inneren Abschnitt 61 einer Tangentialbohrung 62
von dem äußeren Abschnitt 63, der eine Schraube mit
Innensechskantkopf 64 aufnimmt, deren Gewinde mit
dem Innengewinde des Bohrungsabschnittes 61' zusammenwirkt. Die Schraube 64 dient zum Spannen und
Entlasten des Spannringes 58.

In axialer Richtung ist der Spannring 58 mit
einer Madenschraube 65 festgelegt, welche in
einer Radialbohrung 66 des Spannringes 58 eingedreht
ist. Das innere Ende der Madenschraube 65 greift in
eine Umfangsnut 67 der Hohlwelle $1^4$ ein.

Wenn das Zylinderschloß 13 eingesetzt, aber nicht
abgeschlossen ist, hebt der Exzenterstift 21 den
Kupplungsbolzen 18 an, so daß dieser aus der Sackbohrung 68 in der oberen Ringstirnseite austritt.
Dann läßt sich die Welle $1^4$ drehen, um die Spindel
der Armatur mitzunehmen. Durch die Drehung des
Spannringes 58 wird ein in einer radialen Aussparung 69 des Spannringes 58 sitzendes Planetenritzel 70 mitgenommen. Das Planetenritzel greift
in zwei Zahnkränze 71, 72 ein. Der Zahnkranz 72
ist mit einer Buchse 73 verbunden, welcher einen
Skalenring 74 trägt und gegenüber der Hohlwelle
14 verdrehbar ist. Ebenso wie der Skalenring 74 mit der Buchse 73 fest verbunden ist, ist der Zahnkranz 71 mit dem Gehäuse 5 fest verbunden. Beide
Zahnkränze 71, 72 haben einen geringfügig verschiedenen Modul. Hierdurch verdreht sich bei
jeder Umdrehung der Welle 14 der Zahnkranz 71 gegenüber dem Zahnkranz 72 um ein vom Unterschied der
Module abhängiges, geringes Maß. Diese Verschiebung wird an der Skala 74 angezeigt.

Der Zeiger 75 ist fest auf die Hohlwelle 14 aufgeklemmt. Infolgedessen dreht er sich bei jeder
Umdrehung der Hohlwelle, während die Skala 74
sich nur um das beschriebene Maß weiterdreht.

Ferner sind auf der Büchse 73 unter der Skala 74
weitere Ringe 76 und 77 befestigt, die mit Hilfe
ihrer dargestellten Nocken zur Betätigung von
Mikroschaltern 78, 79 dienen. Mit diesen Mikroschaltern wird auf elektrischem Wege die jeweilige Stellung der Armatur elektrisch fernangezeigt.

Wenn in dem Zylinderschloß 13 entsprechend der
Darstellung der Fig. 6 die Bohrung 29 aufgesucht
wird, läßt sich das Schloßgehäuse 12 durch Ausrasten aus der Kerbe 25 herausnehmen, vorausgesetzt, daß der richtige Schlüssel in das Zylinderschloß 13 eingesteckt worden ist. Durch die dann
freiliegende Aussparung 22 kann mit Hilfe eines
Schlüssels die Stiftschraube 33 entfernt werden,
welche axial das Gehäuse 5 durchsetzt und aus
einem Ringfortsatz 80 des Gehäuses austritt, um
in eine Sackbohrung 81 eines Gehäuseflansches 82

26

einzutreten. Der Ringfortsatz 80 führt sich auf einer Ringschulter 83 des Gehäuseflansches 82, der eine Aussparung 84 für einen Bajonettverschluß 85 aufweist.

Die Stiftschraube 33 läßt sich so weit in die Aussparung 22 zurückdrehen, daß sie in dem Ringfortsatz 80 verschwindet. Da der Kupplungsstift 18 durch die Aussparung 22 hindurch zugänglich ist, läßt er sich in seine angehobene Stellung verbringen. Dann kann die Welle 14 so weit verdreht werden, daß der Kopf der Schraube 64 durch eine Radialaussparung 86 des Gehäuses 5 zugänglich wird. Wird der Spannring 58 gelöst, dann läßt sich über die Welle 14 die Zu-Offen- und jede Zwischenstellung einstellen. Diese Einstellbarkeit ist besonders wichtig, wenn in der Stellung Zu die Stellung des Absperrorganes geringfügig mit der Welle 14 korrigiert werden muß, weil z.B. ein Verschleiß im Dichtungssitz eingetreten ist. Der Spannring 58 läßt sich in jeder Stellung kraftschlüssig mit der Welle 14 verspannen. Das ist allerdings nur möglich, wenn vorher der im geschlossenen Zustand von der Stiftschraube 33 durchgesetzte Deckel 87 abgenommen ist, welcher die Radialaussparung 86 verschließt.

Die Madenschraube 65 wird normalerweise nicht gelöst, d.h. aus der Nut herausgedreht. Das Gehäuse 5 läßt sich nämlich von dem Ringfortsatz 83 des Gehäuseflansches 82 abziehen, wenn die Stiftschraube 22 aus der Sackbohrung 81 herausgedreht worden ist. Die Muttern 88 der Flanschschrauben 89 sind allerdings erst zugänglich, wenn der Stift mit dem Gehäuse aus der Aussparung 84 herausgehoben worden ist. Gemäß der dargestellten Ausführungsform sind die Flanschschrauben nicht als Stiftschrauben in den Flansch 35 eingedreht, sondern mit ihren abgerundeten Köpfen 90 auf der Unterseite 91 des Armaturenflansches 35 abgestützt. Die glatte Ausbildung der Köpfe 90 der Flanschschrauben 89 schließt aus, daß diese im montierten Zustand des Gehäuses 5 gelöst werden können.

Die Montage des Gehäuses erfolgt auf umgekehrtem Wege.

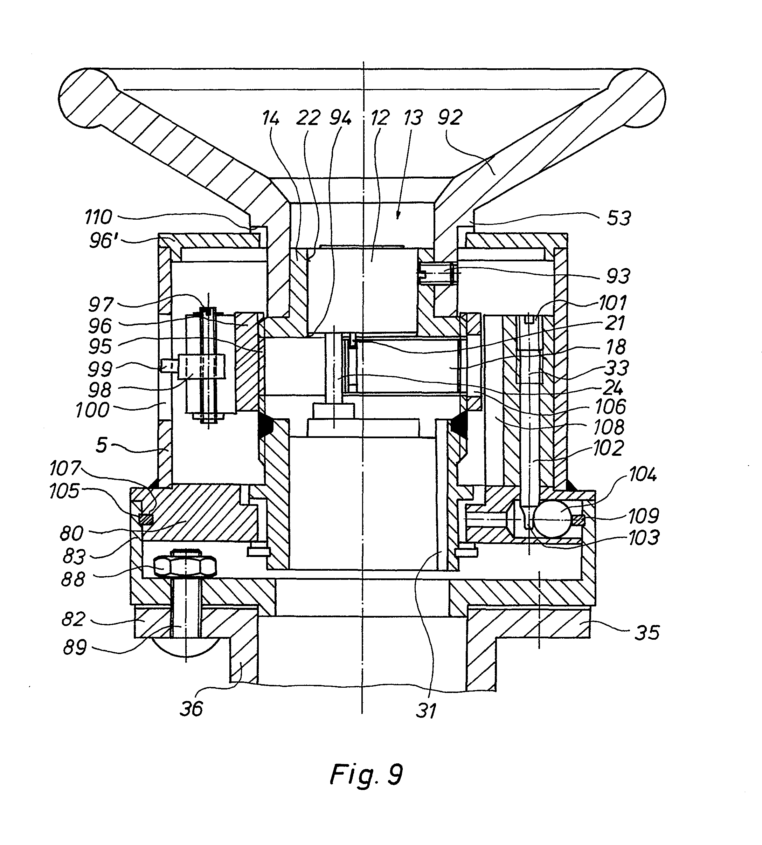

Die Ausführungsform nach Fig. 9 ist für geringere Spindeldurchmesser und kleinere Spindelhübe vorgesehen, hat aber prinzipiell die Wirkungsweise, die im Zusammenhang mit der Ausführung nach den Fig. 7 und 8 beschrieben ist.

Das Handrad 92 sitzt mit seiner Nabe 53 auf der Welle 14 und ist mit dieser über eine Madenschraube 93 versperrt. Die Aussparung 22 sitzt in einem oberen Abschnitt der Welle 14 und ist durch das Handrad und dessen Nabe 53 zugänglich. Das Zylinderschloß 13 sitzt in der Aussparung 22 und wird dort in der beschriebenen Weise von den Stiften 24 gehalten. Der Exzenterbolzen 21 des Schließzylinders im Schloßgehäuse 12 greift in die Ringnut des Kupplungsbolzen 18 ein, der in einer Querbohrung 94 der Welle 14 untergebracht ist. Unter der Querbohrung 94 endet die Axialnut 31 der Welle 14, welche den Kraftschluß mit der Spindel der Armatur 36 herbeiführt. Die Antriebswelle 14 wird von dem Gehäuse 5 umgeben, das im Ausführungsbeispiel der Fig. 9 einen oberen Gehäusedeckel 96' aufweist. Der Ringfortsatz 80 des Gehäuses wirkt mit der Ringschulter 83 des Gehäuseflansches 82 zusammen. Der Flansch 82

26

dient mit seiner Innenseite zur Abstützung der Muttern 88 der Befestigungsschrauben 89, welche den Gehäuseflansch 82 mit dem Armaturenflansch 35 verspannen.

Der Mittelabschnitt der Welle 14 ist mit einem Außengewinde 95 versehen. Auf diesem Wellenabschnitt bewegt sich eine Mutter 96, wenn der Kupplungsbolzen 18 zurückgezogen ist. Das wird dadurch erreicht, daß sich eine Anzeigevorrichtung, welche aus einer Spindel 97, einer Laufmutter 98 und einem Zeiger 99 besteht, der sich an einer axialen Skala 100 führt, wodurch die Mutter gebremst und gegenüber dem Gewinde 95 gedreht wird.

Der Gewindestift 33 mit seinem Schlitzkopf 101 ist mit einem Zapfen 102 verlängert. Sein freies Ende 103 ist der Außenkrümmung einer Kugel 104 angepaßt. Dadurch kann der Stift 33 die Kugel radial verdrängen. Die Kugel stützt sich ihrerseits auf einem Sprengring 109 ab. Der Sprengring wird von der Kugel in eine Nut 105 radial gepreßt und ist in einer Außennut 107 der Ringschulter 80 des Gehäuses 5 geführt. Wird die Kugel 104 durch Drehen des Stiftes 33 im Gewinde radial verdrängt, so wird das Gehäuse 5 gegenüber dem Gehäuseflansch 82 kraftschlüssig festgesetzt. Wird das Schloß 13 abgeschlossen, so führt die Drehung des Zylinders dazu, daß der Exzenter 21 den Kupplungsbolzen 18 radial verstellt, der dadurch durch eine Aussparung 106 in der Mutter 96 in die Axialnut 108 des Gehäuses 5 eintritt. Der dadurch zwischen der Welle 14 über den Kupplungsbolzen 18 und die Mutter 96 mit dem Gehäuse 5 hergestellte Formschluß blockiert die Welle 14 , weil das Gehäuse über die Spannvorrichtung 104 auf dem Gehäuseflansch 82 festgesetzt ist.

Wird das Zylinderschloß 13 mit dem Schlüssel geöffnet, so wird der Kupplungsbolzen 18 zurückgezogen, wodurch mit dem Handrad 92 die Welle 14 und damit die Spindel des Absperrorgans gedreht werden kann. Wird die Bohrung 29 durch Verdrehen der Platte 27 frei und das Schloßgehäuse 12 ausgerastet, so wird die Öffnung der Aussparung 22 freigelegt. Dann kann die Madenschraube 93 entfernt werden, welche im Ausführungsbeispiel der Fig. 9 das in der Reihenfolge der Demontage erste Befestigungsteil darstellt. Ist die Madenschraube 93 zurückgezogen, so kann der Gehäusedeckel 96' abgenommen werden, der sich auf der Ringschulter 110 der Nabe 53 des Handrades 92 abstützt, wenn das Handrad montiert ist.

Bei abgenommenem Gehäusedeckel 96' liegt der Schlitzkopf 101 der Stiftschraube 33 frei. Die Stiftschraube 33 bildet somit das in der Reihenfolge der Demontage zweite Befestigungsteil, das gelöst werden muß. Ist die Stiftschraube 33 zurückgezogen, so wird die Spannvorrichtung aus der Kugel 104 und dem Sprengring 109 freigegeben. Der Sprengring 109 tritt dabei aus der Ringnut 105 im Ringfortsatz 83 des Gehäuseflansches 82 aus. Dann läßt sich das Gehäuse 5 vom Gehäuseflansch 82 abziehen. Dadurch werden die Muttern
88 der Flanschschrauben 89 freigelegt, die dann
ebenfalls abgedreht werden können.

In umgekehrter Reihenfolge wird das Gehäuse 5 montiert. Bei abgeschlossenem Zylinderschloß 13 läßt
sich seine beschriebene Befestigungsvorrichtung
nicht mehr lösen.

Die Voreinstellung erfolgt durch Verdrehen des
Gehäuses 5 gegenüber dem Gehäuseflansch 82 bei
Lockerung der Verspannung mit der Kugel 104 und
Führung des Sprengringes 109 in der Ringnut 105.
Hierbei ist der Kupplungsbolzen 18 zurückgezogen, wodurch die Mutter 96 die Anzeigevorrichtung betätigen kann. Ist die Voreinstellung
vorgenommen, so wird mit der Spannvorrichtung
104 über den Sprengring 109 das Gehäuse 5 auf
dem Gehäuseflansch 82 festgesetzt.

Patentansprüche:

1. Rohrleitungsarmaturenantrieb mit abschließbarer Betätigungssperre, die einen über wenigstens ein Schloß zugänglichen Kupplungsbolzen aufweist, welcher den Kraftschluß von einer vorzugsweise mit einer Handhabe betätigten Antriebswelle auf die Armaturenspindel herstellt oder aufhebt und in einem das Schloß aufnehmenden Gehäuse gelagert ist, welches eine mehrteilige Befestigungsvorrichtung zur Verbindung mit der Armatur aufweist, d a d u r c h   g e k e n n z e i c h n e t, daß das Schloß (13) zum Verschließen und Freigeben einer Gehäuseaussparung (22) dient, durch die der Kupplungsbolzen (18) zugänglich und verstellbar ist und durch die ein in einer vorgegebenen Reihenfolge mit wenigstens einem im Gehäuse (5) untergebrachten weiteren Befestigungsteil (3; 58, 62, 65, 85; 96, 33, 104, 109) verknüpftes Befestigungsteil (33, 93) erreichbar ist, welches als erstes in der Reihenfolge der Demontage der Befestigungsvorrichtung lösbar ist.

2. Rohrleitungsarmaturenantrieb nach Anspruch 1, d a d u r c h   g e k e n n z e i c h n e t, daß die Antriebswelle (14) eine Baueinheit mit dem Gehäuse (5) bildet, wobei der Kraftfluß in die Armaturenspindel (1) durch das Gehäuse (5) und den in eine Büchse (4) eingerückten Kupplungsbolzen (18) und durch eine axiale

- 2 -

26

und eine radiale Nut-Federverbindung (2, 3, 31, 32) verläuft, welche Befestigungsteile bilden, die in der Reihenfolge der Demontage der Befestigungsvorrichtung einem Sicherungsbolzen (33) nachgeordnet sind, der das Gehäuse (5) mit der Büchse (4) verbindet.

3. Rohrleitungsarmaturenantrieb nach Anspruch 1, d a d u r c h   g e k e n n z e i c h n e t, daß das Gehäuse einen Flansch (82) zur Verbindung mit einem Armaturenflansch (35) durch Schraubenbolzen (89) mit glatten Köpfen (90) und in einer Ringkammer des Gehäuses (5) untergebrachten Muttern (88) aufweist, welche die letzten der in der Reihenfolge der Demontage der Befestigungsvorrichtung lösbaren Befestigungsteile bilden, und daß der Flansch (82) mit dem Gehäuse (5) durch einen Verschluß (85; 104, 109) versperrt ist, der über einen durch die Gehäuseaussparung (22) erreichbaren Sperrbolzen (33) entsperrbar ist.

4. Rohrleitungsarmaturenantrieb nach Anspruch 3, d a d u r c h   g e k e n n z e i c h n e t, daß der Verschluß zur Festlegung einer Voreinstellung der Armatur dient und aus einem radial spannbaren Sprengring (109) in je einer Nut (105, 107) des Gehäuses (5) und des Flansches (82) sowie einem mit dem Sperrbolzen (33) radial gegen den Sprengring verdrängbaren Sperrkörper (104) besteht.

5. Rohrleitungsarmaturenantrieb nach Anspruch 3, d a d u r c h   g e k e n n z e i c h n e t, daß der Verschluß aus einem Radialzapfen (5) zur Verbindung einer Gehäuseringschulter (80) mit einem Ringfortsatz (83) des Flansches (82) und einer Aufnahmebohrung (81) im Flansch (82) für den die Ringschulter (80) durchsetzenden Sperrbolzen (33)  besteht.

6. Rohrleitungsarmaturenantrieb nach einem der Ansprüche 1 oder 2, d a d u r c h   g e k e n n z e i c h n e t, daß zur Festlegung einer Voreinstellung der Armatur eine auf dem Armaturenflansch (35) in verschiedenen Drehstellungen mit einer Spannvorrichtung (38) festlegbare Zwischenplatte (37) dient, die eine Rastvorrichtung aufweist, deren Gegenstück (44) in dem Gehäuse untergebracht und mit dem Kupplungsbolzen (18) entsperrbar ist, wobei das eingerastete Gehäuse (5) die Spannvorrichtung (38) überdeckt und unzugänglich macht.

7. Rohrleitungsarmaturenantrieb nach Anspruch 5, d a d u r c h   g e k e n n z e i c h n e t, daß zur Festlegung der Voreinstellung der Armatur ein die Antriebswelle umgebender kraftschlüssiger Spannring (58) dient, welcher mit dem Kupplungsbolzen (18) zusammenwirkt.

8. Rohrleitungsarmaturenantrieb nach einem der Ansprüche 1 bis 7, d a d u r c h   g e k e n n z e i c h n e t , daß der von der eine Abdeckung (87) einer Gehäuseaussparung (86) haltende Gewindestift (33) zusammen mit einem das Gehäuse (5) mit dem Gehäuseflansch (82) verbindenden Bajonettverschluß das erste und die Flanschschrauben (89) das zweite in der Reihenfolge der Demontage der Befestigungsvorrichtung löbare Befestigungsteil darstellen.

9. Rohrleitungsarmaturenantrieb nach einem der Ansprüche 1 bis 7 , d a d u r c h   g e k e n n z e i c h n e t , daß ein mit einer Ringschulter einer Handradnabe (53) gehaltener Gehäusedeckel (96') ein zweites, die Stiftschraube (33) mit einem Verlängerungsstift (102) zur radialen Betätigung einer Kugel (104) ein drittes und der Sprengring (109) zur Verbindung des Ringfortsatzes (80) des Gehäuses (5) mit der Ringschulter (83) des Gehäuseflansches (82) ein drittes in der Reihenfolge der Demontage der Befestigungsvorrichtung lösbares Befestigungsteil bilden.

A 31481

**Fig.1**

**Fig. 2**

0154660

Fig. 3

Fig.4

Fig. 5

Fig. 6

Fig. 7

0154660

Fig. 8

Fig. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 221 158 (RHEINISCHE ARMATUREN- UND MASCHINENFABRIK) * Figuren 3, 5 * | 1 | F 16 K 35/06 |
| A | GB-A-2 101 718 (RHEINISCHE ARMATUREN- UND MASCHINENFABRIK) | | |

RECHERCHIERTE SACHGEBIETE (Int. Cl.4)

F 16 K 35/00

Der vorliegende Recherchenbericht wurde für alle Patentansprüche erstellt.

| Recherchenort BERLIN | Abschlußdatum der Recherche 23-10-1984 | Prüfer SCHLABBACH M |
|---|---|---|